# EUROPEAN PATENT APPLICATION

(11) **EP 4 607 463 A1**
(43) Date of publication of application: **27.08.2025**
(21) Application number: 24223492.0
(22) Date of filing: 27.12.2024
(51) Int. Cl.: G06T 7/246, G06T 7/292

(54) **OBJECT TRACKING METHOD, SMART DEVICE, AND COMPUTER-READABLE STORAGE MEDIUM**

(30) Priority: 26.02.2024 CN 202410209046
(71) Applicant: Anhui NIO Autonomous Driving Technology Co., Ltd., Hefei, Anhui 230601 (CN)
(72) Inventor: WANG, Sukai, AnTing Town, Jiading Shanghai (CN); LI, Chuankang, AnTing Town, Jiading Shanghai (CN); WANG, Zhe, AnTing Town, Jiading Shanghai (CN); DAI, Guozheng, AnTing Town, Jiading Shanghai (CN); WANG, Yunlong, AnTing Town, Jiading Shanghai (CN); YAO, Maoqing, AnTing Town, Jiading Shanghai (CN)
(74) Representative: Vossius & Partner Patentanwälte Rechtsanwälte mbB

(57) **Abstract**

The invention relates to autonomous driving technologies, and specifically provides an object tracking method to improve object tracking performance. The method includes: obtaining a data frame sequence, and obtaining an object matching relationship of an object in a current frame at a historical moment corresponding to each historical frame in the data frame sequence; determining, based on the object matching relationship, whether the object in the current frame and an object represented by an existing object trajectory are the same object; and updating the existing object trajectory based on the object in the current frame if the object in the current frame and the object represented by the existing object trajectory are the same object; or establishing a new object trajectory based on the object in the current frame if the object in the current frame and the object represented by the existing object trajectory are not the same object.

## Description

The present application claims priority of Chinese patent application CN202410209046.8, filed on February 26, 2024, entitled with "Object tracking method, smart device, and computer-readable storage medium", the content of which is incorporated herein by reference in its entirety.

### TECHNICAL FIELD

The invention relates to the field of autonomous driving technologies, and in particular, to an object tracking method, a smart device, and a computer-readable storage medium.

### BACKGROUND ART

When a vehicle is controlled for autonomous driving, objects around the vehicle are sensed and tracked by using sensors on the vehicle, to implement trajectory planning and control on the vehicle based on a tracking result. In an actual driving environment of the vehicle, there are often a plurality of objects around the vehicle. Therefore, it is necessary to accurately and stably track the plurality of objects simultaneously, to ensure driving safety of the vehicle.

The vehicle is usually provided with a variety of sensors (such as a camera and a LiDAR). Object data sensed by the variety of sensors may be fused, and then object tracking is performed based on fused object data. However, currently conventional multi-object tracking methods are mainly local tracking, in which errors in previous tracking results may be introduced, reducing accuracy of multi-object tracking.

Accordingly, there is a need in the art for a new technical solution to solve the problem described above.

### SUMMARY

To overcome the above disadvantages, the invention is proposed to provide an object tracking method, a smart device, and a computer-readable storage medium that solve or at least partially solve the technical problem of how to implement accurate, stable, and reliable multi-object tracking by using object data sensed by a variety of sensors.

According to a first aspect, there is provided an object tracking method, applied to a smart device provided with a plurality of sensors. The method includes:
obtaining a data frame sequence, where the data frame sequence includes frame information of a plurality of data frames, the plurality of data frames are from data frames acquired by the plurality of sensors, the plurality of data frames include a current frame and a plurality of historical frames, the current frame and the plurality of historical frames are arranged in a timing sequence, and the frame information includes object features of an object in the data frame;
performing matching between an object in the current frame and an object in each historical frame based on object features of the object in the current frame and the object in each historical frame, to obtain an object matching relationship of the object in the current frame at a historical moment corresponding to each historical frame;
performing correlation analysis on the object in the current frame and an existing object trajectory based on the object matching relationship of the object in the current frame at each historical moment, to determine whether the object in the current frame and an object represented by the existing object trajectory are the same object; and
updating the existing object trajectory based on the object in the current frame if the object in the current frame and the object represented by the existing object trajectory are the same object; or
establishing a new object trajectory based on the object in the current frame if the object in the current frame and the object represented by the existing object trajectory are not the same object.

In a technical solution of the above object tracking method, the object matching relationship includes an object sequence number and a matching confidence of the object sequence number, where the object sequence number is determined based on a sequence number of a matched object in the historical frame, and the matched object is an object in the historical frame that is matched with the object in the current frame as the same object.

In a technical solution of the above object tracking method, the plurality of sensors include a first sensor and a second sensor, where a data frame acquisition frequency of the first sensor is higher than that of the second sensor, and an error of an object in a data frame acquired by the first sensor is greater than that of an object in a data frame acquired by the second sensor. The obtaining a data frame sequence includes:
if the current frame is a data frame acquired by the first sensor, obtaining first historical frames with a number of frames equal to a first preset value prior to the current frame in the timing sequence, obtaining second historical frames with a number of frames equal toa second preset value prior to the current frame in the timing sequence, and obtaining the data frame sequence based on the current frame, the first historical frames, and the second historical frames; or
if the current frame is a data frame acquired by the second sensor, obtaining second historical frames with a number of frames equal toa third preset value prior to the current frame in the timing sequence, and obtaining the data frame sequence based on the current frame and the second historical frames,
where the first historical frame is a data frame acquired by the first sensor, the second historical frame is a data frame acquired by the second sensor, the first preset value is less than the second preset value, and a sum of the first preset value and the second preset value is equal to the third preset value.

In a technical solution of the above object tracking method, the object features of the object in the data frame is obtained in the following steps:
performing object detection on the data frame, at least to obtain a detection box of the object in the data frame;
obtaining data features and a timestamp of the data frame;
obtaining a type of a sensor that acquires the data frame; and
at least obtaining the object features based on the detection box, the data features, the timestamp, and the type.

In a technical solution of the above object tracking method, the plurality of sensors include a LiDAR and a camera. The obtaining data features of the data frame includes:
if the data frame is a point cloud frame acquired by the LiDAR, obtaining motion information of an object in the point cloud frame; or
if the data frame is an image frame acquired by the camera, obtaining visual features of the image frame.

In a technical solution of the above object tracking method, the object in the data frame includes an actual object and a virtual object, the actual object is an object obtained by performing object detection on the data frame, and the virtual object is a background of the data frame. The method further includes: determining the object sequence number in the object matching relationship in the following steps:
using a sequence number of the actual object as the object sequence number if the matched object is the actual object; or
using a fourth preset value as the object sequence number if the matched object is the virtual object.

In a technical solution of the above object tracking method, the performing matching between an object in the current frame and an object in each historical frame includes:
performing, by using a transformer network, matching between the object in the current frame and the object in each historical frame based on the object features of the object in the current frame and the object in each historical frame.

In a technical solution of the above object tracking method, the transformer network includes an input layer, an encoder, and an output layer.

The input layer is configured to obtain the object features of the object in the current frame and the object in each historical frames.

The encoder is configured to encode the object features of the object in the current frame and the object in each historical frame, to obtain an encoding result, the encoding result including a correlation weight between the object in the current frame and the object in each historical frame, and the correlation weight indicating a degree of correlation between the object in the current frame and the object in the historical frame.

The output layer is configured to determine, based on the encoding result, the object matching relationship of the object in the current frame at the historical moment corresponding to each historical frame.

In a technical solution of the above object tracking method, the encoder includes a first mask layer configured to:
multiply the correlation weight between the object in the current frame and the object in the historical frame by a coefficient with a value of zero if a distance between the object in the current frame and the object in the historical frame is greater than a set value,
where the set value is a product of relative time and a preset speed threshold, the relative time being a time difference between a timestamp of the current frame and a timestamp of the historical frame.

In a technical solution of the above object tracking method, the transformer network further includes a decoder.

The decoder is configured to decode the object features of the object in the current frame and the object in each historical frame, and the encoding result, to obtain a decoding result.

The output layer is further configured to determine, based on the decoding result, the object matching relationship of the object in the current frame at the historical moment corresponding to each historical frame.

In a technical solution of the above object tracking method, the plurality of sensors include a third sensor and a fourth sensor, and an error of an object in a data frame acquired by the third sensor is greater than that of an object in a data frame acquired by the fourth sensor. The decoder includes a second mask layer configured to:
obtain, based on the correlation weight in the encoding result, a matched object from the object in each historical frame that is matched with the object in the current frame as the same object;
if the current frame is a data frame acquired by the fourth sensor, obtain a specified object from the matched object that is matched with the object in the current frame as the same object, the specified object being a matched object in a data frame acquired by the third sensor; and
multiply object features of the specified object by a coefficient with a value of zero.

In a technical solution of the above object tracking method, there are a plurality of objects in the current frame, and a plurality of existing object trajectories. The performing correlation analysis on the object in the current frame and an existing object trajectory includes:
performing, by using a Hungarian algorithm, one-to-one correlation matching between each object in the current frame and each existing object trajectory based on object matching relationships of the objects in the current frame at each historical moment, to determine whether each object and an object represented by each existing object trajectory are the same object.

In a technical solution of the above object tracking method, the performing one-to-one correlation matching between each object in the current frame and each existing object trajectory includes:
obtaining, based on an object matching relationship of each object in the current frame at each historical moment, a first correlation score between each object and each existing object trajectory; and
performing, by using the Hungarian algorithm, one-to-one correlation matching between each object and each existing object trajectory based on the first correlation score between each object and each existing object trajectory,
where the first correlation score indicates a confidence that the object in the current frame and the object represented by the existing object trajectory are the same object.

In a technical solution of the above object tracking method, the obtaining a first correlation score between each object and each existing object trajectory includes:
obtaining, for each object, a second correlation score between the object and each existing object trajectory at each historical moment; and
using a sum of all second correlation scores between the object and each existing object trajectory as the first correlation score between the object and each existing object trajectory,
where if an object sequence number of the object at the historical moment has not occurred in the existing object trajectory, the second correlation score is zero; or
if an object sequence number of the object at the historical moment has occurred in the existing object trajectory, a weighted sum of a matching confidence of the object sequence number and a fifth preset value is calculated, to obtain the second correlation score based on a calculation result of the weighted sum,
the fifth preset value indicating that the object sequence number of the object in the current frame at the historical moment has occurred in the existing object trajectory.

In a technical solution of the above object tracking method, the obtaining a second correlation score between the object and each existing object trajectory at each historical moment includes:
obtaining, for the historical moment corresponding to each historical frame, the second correlation score between the object and each existing object trajectory at the historical moment if the matching confidence of the object at the historical moment is greater than a set threshold.

In a technical solution of the above object tracking method, the method further includes:
deleting the existing object trajectory if the existing object trajectory has not been updated within a preset duration.

According to a second aspect, there is provided a computer-readable storage medium having a plurality of program codes stored therein, where the program codes are adapted to be loaded and executed by at least one processor to perform the method described in any one of the above technical solutions of the object tracking method.

According to a third aspect, there is provided a smart device. The smart device includes: at least one processor; and a memory in communication connection with the at least one processor, where the memory stores a computer program that, when executed by the at least one processor, implements the method described in any one of the above technical solutions of the object tracking method.

The one or more technical solutions of the invention described above have at least one or more of the following beneficial effects.

In the technical solution for implementing the object tracking method provided in the invention, the method is applied to the smart device provided with the plurality of sensors. The method includes the following steps: obtaining the data frame sequence, where the data frame sequence includes the frame information of the plurality of data frames, the plurality of data frames are from the data frames acquired by the plurality of sensors, the plurality of data frames include the current frame and the plurality of historical frames, the current frame and the plurality of historical frames are arranged in the timing sequence, and the frame information includes the object features of the object in the data frame; performing matching between the object in the current frame and the object in each historical frame based on the object features of the object in the current frame and the object in each historical frame, to obtain the object matching relationship of the object in the current frame at the historical moment corresponding to each historical frame; performing correlation analysis on the object in the current frame and the existing object trajectory based on the object matching relationship of the object in the current frame at each historical moment, to determine whether the object in the current frame and the object represented by the existing object trajectory are the same object; and updating the existing object trajectory based on the object in the current frame if the object in the current frame and the object represented by the existing object trajectory are the same object; or establishing the new object trajectory based on the object in the current frame if the object in the current frame and the object represented by the existing object trajectory are not the same object.

In the above implementation solution, the existing object trajectory includes all information (e.g., object features) of the object from an initial moment to the latest moment. Therefore, the existing object trajectory is global information, performing correlation analysis on the object in the current frame and the existing object trajectory is actually performing correlation analysis on the object in the current frame and the global information, and object tracking implemented based on a result of correlation analysis is global tracking of the object. Compared with local tracking in the prior art, this can significantly improve accuracy of object tracking. In addition, in the above implementation solution, object tracking is performed by using the data frames acquired by the plurality of sensors on the smart device, that is, object detection results of the plurality of sensors are integrated, so that the accuracy of object tracking can be further improved.

### BRIEF DESCRIPTION OF THE DRAWINGS

The disclosed content of the invention will become more readily understood with reference to the accompanying drawings. Those skilled in the art readily understand that these accompanying drawings are merely for illustrative purposes and are not intended to limit the scope of protection of the invention. In the drawings:
FIG. 1 is a schematic flowchart of main steps of an object tracking method according to an embodiment of the invention;
FIG. 2 is a schematic flowchart of main steps for obtaining object features of an object in a data frame according to an embodiment of the invention;
FIG. 3 is a schematic diagram of a structure of a transformer network according to an embodiment of the invention;
FIG. 4 is a schematic diagram of a point cloud frame of a LiDAR point cloud according to an embodiment of the invention;
FIG. 5 is a schematic flowchart of main steps for performing correlation analysis on an object in a current frame and an existing object trajectory according to an embodiment of the invention;
FIG. 6 is a schematic flowchart of a process of performing correlation analysis on an object in a current frame and an object trajectory, and processing the object trajectory based on a result of correlation analysis according to an embodiment of the invention;
FIG. 7 is a schematic flowchart of main steps of an object tracking method according to another embodiment of the invention; and
FIG. 8 is a schematic diagram of a main structure of a smart device according to an embodiment of the invention.

List of reference numerals:
11: Memory; 12: Processor.

### DETAILED DESCRIPTION OF EMBODIMENTS

Some implementations of the invention are described below with reference to the accompanying drawings. Those skilled in the art should understand that these implementations are only used to explain the technical principles of the invention, and are not intended to limit the scope of protection of the invention.

In the description of the invention, a "processor" may include hardware, software, or a combination thereof. The processor may be a central processing unit, a microprocessor, a graphics processing unit, a digital signal processor, or any other suitable processor. The processor has a data and/or signal processing function. The processor may be implemented in software, hardware, or a combination thereof. A computer-readable storage medium includes any suitable medium that can store program code, such as a magnetic disk, a hard disk, an optical disc, a flash memory, a read-only memory, or a random access memory.

Related user personal information that may be involved in the embodiments of the invention is all personal information that is provided actively by a user in a process of using a product/service or is generated by using a product/service and that is obtained through authorization by the user based on an appropriate purpose of a service scenario strictly in accordance with requirements of laws and regulations and in accordance with the principles of legality, legitimacy, and necessity.

The user personal information processed in the invention varies depending on the specific product/service scenario, and shall be subject to the specific scenario in which the user uses the product/service. It may involve account information, device information, driving information, vehicle information, or other related information of the user. The user personal information and processing thereof shall be treated in the invention with a high degree of diligence.

The invention attaches great importance to the security of the user personal information, and reasonable and feasible security protection measures that comply with industry standards have been taken to protect information of the user and prevent the personal information from unauthorized access, public invention, use, modification, damage or loss.

An embodiment of an object tracking method provided in the invention is described below.

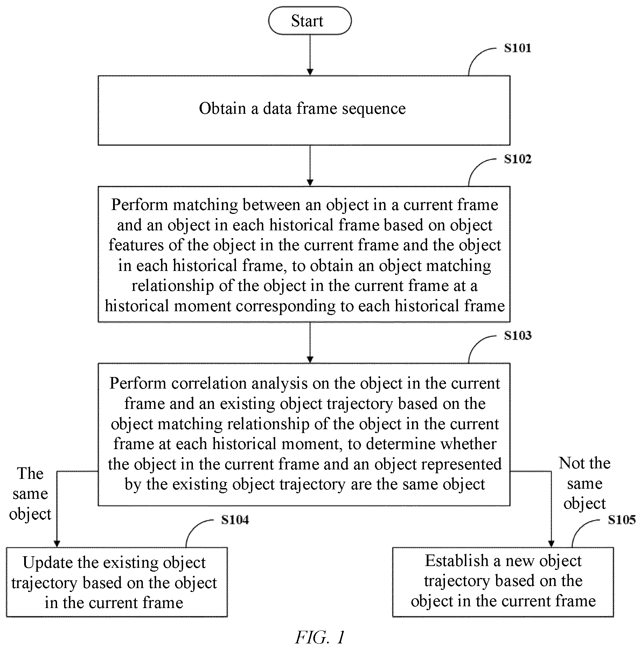

Referring to FIG. 1, FIG. 1 is a schematic flowchart of main steps of an object tracking method according to an embodiment of the invention. The object tracking method provided in this embodiment is applied to a smart device on which a plurality of sensors may be provided. The smart device may include a driving device, a smart car, a robot, etc., and the sensors may include a LiDAR, a camera, etc. As shown in FIG. 1, the object tracking method in this embodiment of the invention mainly includes steps S101 to S105 below.

Step S101: Obtain a data frame sequence.

The data frame sequence includes frame information of a plurality of data frames, the plurality of data frames are from data frames acquired by the plurality of sensors on the smart device, the plurality of data frames include a current frame and a plurality of historical frames, and the current frame and the plurality of historical frames are arranged in a timing sequence. Arranging in the timing sequence may be understood as sorting the current frame and the plurality of historical frames from the earliest to the latest based on timestamps of the data frames (the current frame and the plurality of historical frames).

The frame information includes object features of an object in the data frame. There may be a plurality of objects in a data frame, and there may be a plurality of objects in both the current frame and each historical frame. In this regard, each object in a data frame may be numbered, to form a sequence number of each object in the data frame. In a data frame, each object is in one-to-one correspondence to each sequence number. The object features include at least a detection box and a sequence number of the object in the data frame, the detection box being a bounding box of the object. In addition, the object features may further include other feature information related to the object.

A data tensor for the data frame sequence is shape=(T, N, D). T denotes a number of data frames, i.e., one current frame and T-1 historical frames. N denotes a maximum number of objects in each data frame, where N ≥ 1. D denotes a feature dimension of the object features of each object. Those skilled in the art can flexibly set values of T, N, and D according to actual requirements. This is not specifically limited in this embodiment.

The plurality of data frames described above may also be data frames acquired by a same sensor. For example, the T data frames are all point cloud frames acquired by a LiDAR.

Step S102: Perform matching between an object in the current frame and an object in each historical frame based on object features of the object in the current frame and the object in each historical frame, to obtain an object matching relationship of the object in the current frame at a historical moment corresponding to each historical frame.

The object matching relationship may indicate which object in the historical frame is matched with the object in the current frame at the historical moment corresponding to the historical frame, i.e., which object can represent the same object as the object in the current frame.

In some implementations, the object matching relationship of the object in the current frame at the historical moment corresponding to the historical frame includes an object sequence number and a matching confidence of the object sequence number. The object sequence number is determined based on a sequence number of a matched object in the historical frame, and the matched object is an object in the historical frame that is matched with the object in the current frame as the same object.

When matching is performed between the object in the current frame and the object in each historical frame, a confidence between the object in the current frame and the object in each historical frame may be obtained. A greater confidence indicates higher reliability that the object in the current frame is matched with the object in the historical frame as the same object. The matching confidence is a confidence that the above matched object is matched with the object in the current frame as the same object.

The following uses one historical frame as an example to briefly describe obtaining of the object matching relationship.

It is assumed that there are n objects in the current frame (hereinafter referred to as n current objects) and m objects in the historical frame (hereinafter referred to as m historical objects). For each current object, matching is separately performed between the current object and the m historical objects based on object features of the current object and object features of the m historical objects, and a historical object that is matched with the current object as the same object is obtained from the m historical objects as a matched object. In addition, a confidence that the historical object is matched with the current object as the same object, i.e., a matching confidence, may also be obtained. A sequence number of the matched object in the above historical frame is used as an object sequence number, and an object matching relationship of the current object at a historical moment corresponding to the above historical frame is obtained based on the object sequence number and the matching confidence.

Step S103: Perform correlation analysis on the object in the current frame and an existing object trajectory based on the object matching relationship of the object in the current frame at each historical moment, to determine whether the object in the current frame and an object represented by the existing object trajectory are the same object.

In this embodiment, since the object matching relationship may indicate which object in the historical frame is matched with the object in the current frame at the historical moment corresponding to the historical frame, the matched object of the object in the current frame at each historical moment may be obtained based on the object matching relationship. The matched object is the object in the historical frame that is matched with the object in the current frame as the same object. If matched objects at all or most historical moments occur in the existing object trajectory, it indicates that the object in the current frame and the object represented by the existing object trajectory are the same object.

In some implementations, the object trajectory may be obtained based on object features of the object at each moment, and the object features include a sequence number of the object in a data frame. Therefore, a sequence number of the object represented by the object trajectory at each moment may be obtained based on the object features in the object trajectory, where the sequence number is the sequence number of the object in the data frame at the corresponding moment. When the object matching relationship of the object in the current frame at each historical moment includes the object sequence number, it may be queried whether the sequence number of the object in the object trajectory at each historical moment described above is consistent with the object sequence number at the corresponding moment, and if all or most sequence numbers are consistent with corresponding object sequence numbers, it indicates that the object in the current frame and the object represented by the object trajectory are the same object.

After it is determined that the object in the current frame and the object represented by the object trajectory are the same object, the object trajectory may be updated based on the object in the current frame, and thus step S 104 is performed; or if it is determined that the object in the current frame and the object represented by the object trajectory are not the same object, step S 105 is performed.

Step S104: Update the existing object trajectory based on the object in the current frame.

Step S105: Establish a new object trajectory based on the object in the current frame. If it is determined that the object in the current frame and the object represented by the object trajectory are not the same object, it indicates that the object in the current frame is a completely new object, so that a completely new object trajectory needs to be established.

In some implementations, the existing object trajectory is deleted if the existing object trajectory has not been updated within a preset duration. When the object trajectory has not been updated for a long time, it indicates that the sensor has not detected the object represented by the object trajectory for a long time and that the object is already distant from the smart device. Therefore, the object may no longer be tracked, and the object trajectory may be deleted.

Those skilled in the art can flexibly set a value of the preset duration according to actual requirements, as long as it can be determined that the object is already distant from the smart device. This is not specifically limited in this embodiment.

In some implementations, the plurality of sensors on the smart device may acquire data frames at different frequencies. Therefore, when the object trajectory is updated based on the object in the current frame, timestamp alignment may be first performed on the current frame and the object trajectory, and then the object trajectory is updated based on the object in the current frame.

In the method described with the above steps S101 to S104, the existing object trajectory includes all information (e.g., object features) of the object from an initial moment to the latest moment. Therefore, the existing object trajectory is global information, performing correlation analysis on the object in the current frame and the existing object trajectory is actually performing correlation analysis on the object in the current frame and the global information, and object tracking implemented based on a result of correlation analysis is global tracking of the object. Compared with local tracking, this method can significantly improve accuracy of object tracking.

In the above method, there may be a plurality of objects in a data frame, and object tracking is performed by using the data frames acquired by the plurality of sensors on the smart device, that is, object detection results of the plurality of sensors are integrated, to implement multi-object tracking, so that the accuracy of object tracking can be further improved.

In addition, in the above method, errors can be corrected, so that impact of historical errors on a current tracking result can be eliminated. Specifically, for an object trajectory, if erroneous tracking occurs at a moment T_0 (e.g., it is mistakenly determined that the object in the current frame and an object represented by the object trajectory are the same object, and the object trajectory is updated based on the object in the current frame), it can be ensured that no tracking error occurs at a moment T_0+1 as long as no tracking error occurs at all or most moments before the moment T_0 as correlation analysis is performed on the object in the current frame and the entire object trajectory when tracking is performed at the moment T_0+1, so that error correction of the tracking result is implemented.

The above steps S 101 to S103 are further described below.

First, step S 101 is described.

In some implementations of the above step S101, the data frames in the data frame sequence may be data frames acquired by a same sensor, or data frames acquired by different sensors. For example, the data frames may all be point cloud frames acquired by the LiDAR, or all be image frames acquired by a camera, or partially be point cloud frames and partially be image frames.

In this implementation, the plurality of sensors provided on the smart device may include a first sensor and a second sensor, where a data frame acquisition frequency of the first sensor is higher than that of the second sensor, and an error of an object in a data frame acquired by the first sensor is greater than that of an object in a data frame acquired by the second sensor. For example, the first sensor may be the camera, and the second sensor may be the LiDAR. Data frame acquisition frequencies of the camera and the LiDAR are 30 hz and 10 hz, respectively.

In this implementation, the data frame sequence may be obtained by using different methods based on a type of the current frame. The type of the current frame is determined based on a type of the sensor.

### 1. The current frame is a data frame acquired by the first sensor.

In this case, first historical frames with a number of frames equal toa first preset value prior to the current frame in the timing sequence may be obtained, second historical frames with a number of frames equal toa second preset value prior to the current frame in the timing sequence may be obtained, and the data frame sequence is obtained based on the current frame, the first historical frames, and the second historical frames.

Each data frame has a timestamp, and a data frame prior to the current frame in the timing sequence refers to a historical frame with a timestamp prior to that of the current frame.

The first historical frame is a data frame acquired by the first sensor, the second historical frame is a data frame acquired by the second sensor, and the first preset value is less than the second preset value. When the first historical frames are obtained, the first historical frames with the number of frames equal tothe first preset value may be obtained in an order from the closest to the farthest relative to the current frame in the timing sequence. Similarly, when the second historical frames are obtained, the second historical frames with the number of frames equal to the second preset value may also be obtained in an order from the closest to the farthest relative to the current frame in the timing sequence.

Those skilled in the art can flexibly set values of the first preset value and the second preset value based on the number T of data frames in the data frame sequence and in conjunction with actual requirements. This is not specifically limited in this implementation. For example, the first sensor and the second sensor are the camera and the LiDAR, respectively, and the number of data frames in the data frame sequence is T=10. If the current frame is an image frame acquired by the camera, four historical image frames acquired by the camera and five historical point cloud frames acquired by the LiDAR may be obtained.

Since the error of the object in the data frame acquired by the first sensor (e.g., the camera) is greater than that of the object in the data frame acquired by the second sensor (e.g., the LiDAR), object tracking needs to be performed by using the data frame acquired by the second sensor, to improve the accuracy of object tracking. In addition, since the data frame acquisition frequency of the first sensor (e.g., the camera) is higher than that of the second sensor (e.g., the LiDAR), if the current frame is a data frame acquired by the first sensor, in order to prevent an emergency such as sudden occurrence of a dynamic object (such as a behavior or a non-motorized vehicle) in a blind area of the smart device, a high frequency response to the tracking of such an object is required. Therefore, it is also necessary to perform object tracking by using the data frames acquired by the first sensor, to improve the response speed for tracking the above object.

In practical applications, the sensor may fail or lose frames. In this case, object tracking can be accurately completed as long as the first historical frames with the number of frames equal to the first preset value and the second historical frames with the number of frames equal to the second preset value can be obtained by using the above method.

### 2. The current frame is a data frame acquired by the second sensor.

In this case, second historical frames with a number of frames equal toa third preset value prior to the current frame in the timing sequence may be obtained, and the data frame sequence is obtained based on the current frame and the second historical frames.

When the second historical frames are obtained, the second historical frames with the number of frames equal to the third preset value may be obtained in an order from the closest to the farthest relative to the current frame in the timing sequence.

The third preset value is equal to a sum of the first preset value and the second preset value. Since the number of data frames in the data frame sequence is T, it may be determined that T-1 second historical frames need to be obtained except for the current frame, i.e., the third preset value is T-1. For example, the first sensor and the second sensor are the camera and the LiDAR, respectively, and the number of data frames in the data frame sequence is T=10. If the current frame is a point cloud frame acquired by the camera, nine second historical frames (historical point cloud frames acquired by the LiDAR) may be obtained.

Since the error of the object in the data frame acquired by the second sensor (e.g., the LiDAR) is less than that of the object in the data frame acquired by the first sensor (e.g., the camera), the accuracy of object tracking can also be ensured by using only the data frames acquired by the second sensor. Therefore, in this implementation, only the data frames acquired by the second sensor may be obtained.

When the sensor fails or loses frames, object tracking can be accurately completed as long as the second historical frames with the number of frames equal to the third preset value can be obtained by using the above method.

Based on the above implementation, different methods may be used to obtain the data frame sequence based on the type of the current frame in the case that different sensors have different data frame acquisition frequencies. This can maximally improve object tracking effects by using the data frame sequence.

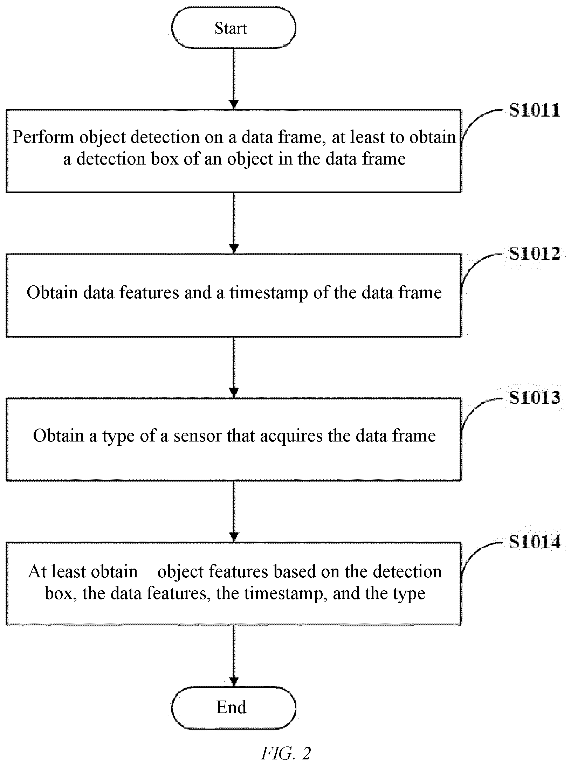

In some implementations of the above step S101, the object features of the object in the data frame may be obtained through the following steps S 1011 to S 1014 shown in FIG. 2.

Step S1011: Perform object detection on the data frame, at least to obtain a detection box of the object in the data frame.

In this embodiment, object detection may be performed on the data frame by using a conventional object detection method, to obtain the detection box of the object, the detection box being a bounding box of the object in the data frame. For example, an object detection model may be trained in advance, and then object detection may be performed on the data frame by using the object detection model. For example, the data frame is a point cloud frame acquired by the LiDAR or an image frame acquired by the camera. A model for performing object detection on point cloud frames may be trained, and then object detection is performed on the point cloud frame by using the model, to obtain a detection box of the object, as well as information such as a size, a position, and an orientation of the object. In addition, a model for performing object detection on image frames may also be trained, and then object detection is performed on the image frame by using the model, to obtain a detection box of the object. A method for obtaining the detection box of the object is not specifically limited in this embodiment, as long as a detection box of each object in the data frame can be obtained.

Step S 1012: Obtain data features and a timestamp of the data frame.

The timestamp may be a timestamp of time at which the sensor acquires the data frame.

In some implementations, the plurality of sensors provided on the smart device include the LiDAR and the camera, a data frame acquired by the LiDAR is a point cloud frame, and a data frame acquired by the camera is an image frame. The following describes a method for obtaining data features of the point cloud frame and data features of the image frame.

For the point cloud frame, the point cloud frame may be detected to obtain motion information of the object in the point cloud frame, and the motion information of the object is used as the data features of the point cloud frame. For example, the point cloud frame is detected by using a preset network, to obtain the motion information of the object. Those skilled in the art can flexibly select a network having a function of detecting the motion information of the object in the point cloud frame as the above preset network according to actual requirements. This is not specifically limited in this implementation. For example, in some implementations, the motion information of the object in the point cloud frame may be obtained by using a general obstacle detection network (GOD). The motion information includes, but is not limited to, a motion status (or dynamic/static information), a scene category, a scene probability, and the like.

For the image frame, visual features of the image frame may be obtained, and the visual features are used as the data features of the image frame. In this implementation, the visual features of the image frame may be obtained by using a conventional visual features obtaining method. The visual features include, but is not limited to, a motion status (or dynamic/static information), a velocity, an occlusion condition, a person re-identification (Re-ID) feature, and the like.

Step S1013: Obtain a type of a sensor that acquires the data frame.

Step S 1014: At least obtain the object features based on the detection box, the data features, the timestamp, and the type. Specifically, the detection box, the data features, the timestamp, and the type may be combined into combined features, i.e., the object features.

In some implementations, position information, size information, orientation information, etc., of the object may also be obtained based on the detection box of the object. The detection box, the data features, the timestamp, the type, and the position information, the size information, the orientation information, etc., of the object are combined into the object features.

Based on the above implementation, richness of the object features can be improved, so that accuracy of matching between the object in the current frame and the object in each historical frame can be improved when step S 102 is performed, further ensuring the accuracy of object tracking.

Second, step S 102 is described.

When matching is performed between the object in the current frame and the object in the historical frame, there may be no object in the historical frame that can be matched with the object in the current frame as the same object. In this regard, it is necessary to accurately identify such a situation and assign a reliable object sequence number to the object in the current frame, to ensure that correlation analysis can be accurately performed on the object in the current frame and the existing object trajectory when step S103 is performed.

In order to solve the above problem, in some implementations of the above step S102, the object obtained by performing object detection on the data frame may be used as an actual object, and a background of the data frame may be used as a virtual object. When matching is performed between the object in the current frame and the object in the historical frame, matching may be performed on the actual object and the virtual object in the historical frame separately. If the object in the current frame is matched with the actual object as the same object, a sequence number of the actual object in the data frame is used as the object sequence number of the object in the current frame; or if the object in the current frame is matched with the virtual object as the same object, the object sequence number is set to a fourth preset value.

The fourth preset value should be different from sequence numbers of objects in all the data frames. For example, if the sequence numbers of the objects in the data frames are from 1 to N, the fourth preset value may be set to 0. Those skilled in the art can flexibly set a specific value of the fourth preset value according to actual requirements, as long as the fourth preset value is different from the sequence numbers of the objects in all the data frames. This is not specifically limited in this implementation.

Based on the above implementation, the object sequence number can be accurately and reliably assigned to the object in the current frame when there is no object in the historical frame that is matched with the object in the current frame as the same object.

In some implementations of the above step S102, matching may be performed between the object in the current frame and the object in each historical frame based on the object features of the object in the current frame and the object in each historical frame by using a transformer network. The transformer network can process input data and output data of different lengths, and can process a plurality of pieces of input data and a plurality of pieces of output data simultaneously. Therefore, a plurality of objects can be tracked simultaneously by using the transformer network, improving the efficiency of multi-object tracking and reducing computational overheads in object tracking. The transformer network is suitable for deploying the object tracking method provided in this implementation on the smart device without increasing the burden on computing resources of the smart device. In addition, the transformer network can effectively capture global information of the input data, which is beneficial to improving the accuracy of matching between the object in the current frame and the object in the historical frame.

In some implementations, the transformer network may include an input layer, an encoder, and an output layer. The input layer, the encoder, and the output layer are separately described below.

The input layer may be configured to obtain the object features of the object in the current frame and the object in each historical frame. The encoder may be configured to encode data obtained by the input layer (i.e., the object features of the object in the current frame and the object in each historical frame), to obtain an encoding result. The output layer may be configured to determine, based on the encoding result, the object matching relationship of the object in the current frame at the historical moment corresponding to each historical frame.

The encoding result may include a correlation weight between the object in the current frame and the object in each historical frame in the data frame sequence, and the correlation weight indicates a degree of correlation between the object in the current frame and the object in the historical frame. The correlation weight indicates the degree of correlation between the object in the current frame and the object in the historical frame. A greater correlation weight indicates a higher possibility that the object in the current frame is matched with the object in the historical frame as the same object, and a smaller correlation weight indicates a lower possibility that the object in the current frame is matched with the object in the historical frame as the same object.

Based on the above implementation, matching between the object in the current frame and the object in the historical frame can be accurately and reliably completed by using the transformer network.

Further, in some implementations, the encoder includes a first mask layer configured to: multiply the correlation weight between the object in the current frame and the object in the historical frame by a coefficient with a value of zero if a distance between the object in the current frame and the object in the historical frame is greater than a set value. The set value is a product of relative time and a preset speed threshold, the relative time being a time difference between a timestamp of the current frame and a timestamp of the historical frame.

If the distance between the object in the current frame and the object in the historical frame is greater than the set value, it indicates that the two objects differ greatly and are unlikely to be matched as the same object. The correlation weight is zero after being multiplied by the coefficient with the value of zero, which is equivalent to masking the correlation weight, such that the encoder does not need to obtain the correlation weight any longer. This saves time, and can quickly complete matching between the object in the current frame and the object in the historical frame, that is, improve the processing efficiency of the transformer network.

It should be noted that the input layer, the encoder, and the output layer are conventional structures of the transformer network. It is conventional technical means of the transformer network that the output layer obtains an output result based on the encoding result from the encoder. A method for the output layer to obtain output data based on the encoding result is not specifically limited in this implementation.

In some implementations, the transformer network may include an input layer, an encoder, a decoder, and an output layer, where the input layer and the encoder have the same functions as those in the above implementation. In this implementation, the decoder may be configured to decode the object features of the object in the current frame and the object in each historical frame, and the encoding result, to obtain a decoding result. The output layer may be configured to determine, based on the decoding result, the object matching relationship of the object in the current frame at the historical moment corresponding to each historical frame.

It should be noted that the input layer, the encoder, the decoder, and the output layer are conventional structures of the transformer network. It is conventional technical means of the transformer network that the decoder performs decoding processing based on an output result from the encoder and data obtained by the input layer. It is also conventional technical means of the transformer network that the output layer obtains the output result based on the decoding result from the decoder. A method for the decoder to perform decoding processing and a method for the output layer to obtain the output data based on the decoding result are not specifically limited in this implementation.

Further, in some implementations, the plurality of sensors on the smart device may include a third sensor and a fourth sensor, and an error of an object in a data frame acquired by the third sensor is greater than that of an object in a data frame acquired by the fourth sensor. In some implementations, the third sensor may be the same sensor as the first sensor in the above embodiments, such as the camera, and the fourth sensor may be the same sensor as the second sensor in the above embodiments, such as the LiDAR.

In this implementation, the decoder may include a second mask layer configured to: obtain, based on the correlation weight in the encoding result, a matched object from the object in each historical frame that is matched with the object in the current frame as the same object; if the current frame is a data frame acquired by the fourth sensor (e.g., the LiDAR), obtain a specified object from the matched object that is matched with the object in the current frame as the same object, the specified object being a matched object in a data frame acquired by the third sensor (the camera); and multiply object features of the specified object by a coefficient with a value of zero.

Since the error of the object in the data frame acquired by the third sensor (e.g., the camera) is greater than that of the object in the data frame acquired by the fourth sensor (e.g., the LiDAR), performing decoding processing by using a matched object in the data frame acquired by the third sensor may reduce object matching effects. Multiplying the object features of the above specified object by the coefficient with the value of zero is equivalent to masking the object features of the specified object, such that the decoder no longer performs decoding processing based on the object features of the specified object, improving the accuracy of object matching.

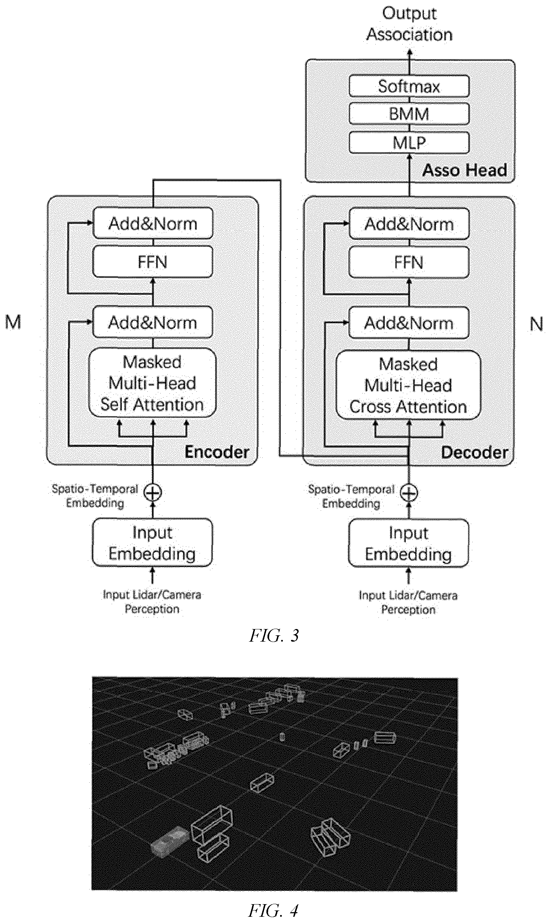

The transformer network is described below in conjunction with FIG. 3 and FIG. 4.

Referring to FIG. 3, in this implementation, the transformer network includes the input layer, M encoders (Encoder), N decoders (Decoder), and the output layer, where M ≥ 1, and N ≥ 0.

The input layer obtains the object features of the object in the current frame and the object in each historical frame, and inputs the data to the encoder (Encoder) and the decoder (Decoder). The encoder (Encoder) encodes the data, and inputs an encoding result to the decoder (Decoder). The decoder (Decoder) decodes the data and the encoding result, and inputs a decoding result to the output layer. The output layer determines and outputs, based on the decoding result, the object matching relationship of the object in the current frame at the historical moment corresponding to each historical frame. If the data tensor of the data frame sequence is shape=(T, N, D), a data tensor of the object sequence number output by the output layer is shape=(T, N), and a data tensor of the matching confidence is shape=(T, N). A value of the matching confidence ranges from 0 to 1.

The input layer includes Input Embedding. Through the Input Embedding, the input data (the object features of the object in the current frame and the object in each historical frame) may be vectorized to obtain Spatio-Temporal Embedding. Referring to FIG. 4, FIG. 4 shows an example of detection boxes of objects in a point cloud frame when the data frame is the point cloud frame of a LiDAR point cloud. The detection boxes of the objects may be vectorized through the Input Embedding.

The encoder (Encoder) includes Add&Norm, FFN (feed forward neural network), and Masked Multi-Head Self Attention. The Add&Norm includes two parts: Add representing a residual structure and Norm representing normalization, both of which are conventional structures of the transformer network. Similarly, the FFN and the Masked Multi-Head Self Attention are also conventional structures of the transformer network, and are not described in detail herein.

The decoder (Decoder) includes Add&Norm, FFN, and Masked Multi-Head Cross Attention. The Masked Multi-Head Cross Attention is also a conventional structure of the transformer network, and is not described in detail herein.

The output layer includes MLP (multilayer perceptron), BMM (batch matrix multiplication), and Softmax. The MLP, the BMM, and the Softmax are also conventional structures of the transformer network, and are not described in detail herein.

Third, step S 103 is described.

In some implementations of the above step S103, there are a plurality of objects in the current frame, and a plurality of existing object trajectories. In this case, one-to-one correlation matching may be performed between each object in the current frame and each existing object trajectory based on the object matching relationship of the object in the current frame at each historical moment by using a Hungarian algorithm, to determine whether each object and an object represented by each existing object trajectory are the same object.

When there are the plurality of objects in the current frame, and the plurality of existing object trajectories, correlation matching between the object and the object trajectory based on the object matching relationship may result in matching of one object with a plurality of object trajectories. In this regard, in this implementation, one-to-one correlation matching may be performed between the objects in the current frame and the object trajectories by using the Hungarian algorithm, to determine which object trajectory represents an object that is the same object as each object in the current frame. In this way, one object in the current frame corresponds to one object trajectory, avoiding the above case where one object in the current frame corresponds to a plurality of object trajectories.

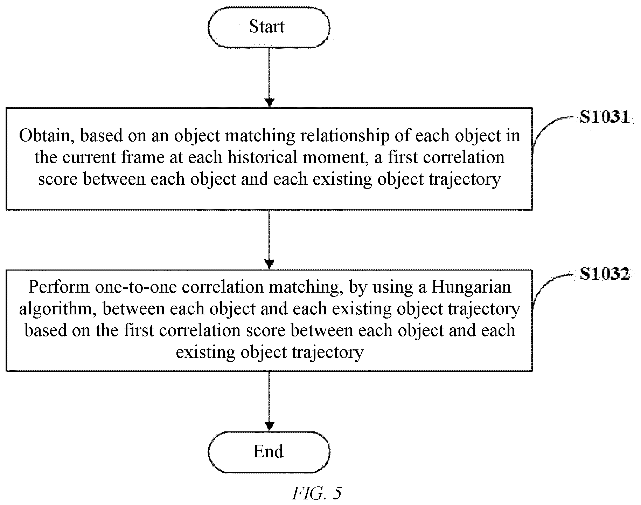

In some implementations, correlation analysis may be performed on the object in the current frame and the existing object trajectory through the following steps S1031 to S1032 shown in FIG. 5.

Step S1031: Obtain, based on an object matching relationship of each object in the current frame at each historical moment, a first correlation score between each object and each existing object trajectory.

The first correlation score indicates a confidence that the object in the current frame and the object represented by the existing object trajectory are the same object. In other words, a higher first correlation score indicates a higher possibility that the object in the current frame and the object represented by the existing object trajectory are the same object.

In some implementations, the first correlation score may be obtained through the following steps:
obtaining, for each object, a second correlation score between the object in the current frame and each existing object trajectory at each historical moment; and using a sum of all second correlation scores between the object in the current frame and each existing object trajectory as the first correlation score between the object in the current frame and each existing object trajectory.

If an object sequence number of the object in the current frame at the historical moment has not occurred in the existing object trajectory, the second correlation score is zero.

If an object sequence number of the object in the current frame at the historical moment has occurred in the existing object trajectory, a weighted sum of a matching confidence of the object sequence number and a fifth preset value is calculated, to obtain the second correlation score based on a calculation result of the weighted sum. The second correlation score may be represented as w1×a+w2×b, where a and b denote the fifth preset value and the matching confidence, respectively, and w1 and w2 denote weights of the fifth preset value and the matching confidence, respectively.

The fifth preset value indicates that the object sequence number of the object in the current frame at the historical moment has occurred in the existing object trajectory. Those skilled in the art can flexibly set a value of the fifth preset value according to actual requirements, as long as the fifth preset value is fixed. This is not specifically limited in this implementation. For example, in some implementations, the fifth preset value may be set to 1. In addition, those skilled in the art can also flexibly set the weights of the fifth preset value and the matching confidence according to actual requirements. This is not specifically limited in this implementation as well. For example, in some implementations, the weights of the fifth preset value and the matching confidence are 2 and 1, respectively.

In some implementations, for the historical moment corresponding to each historical frame, the second correlation score between the object in the current frame and each existing object trajectory at the historical moment is obtained if the matching confidence of the object in the current frame at the historical moment is greater than a set threshold; or the second correlation score is no longer obtained if the matching confidence of the object in the current frame at the historical moment is not greater than a set threshold.

If the matching confidence is less than or equal to the set threshold, it indicates that the object in the current frame and the object represented by the object trajectory may not be the same object, and a correlation error may occur. Therefore, the second correlation score of the object in the current frame at the above historical moment is no longer obtained, to ensure the accuracy of the first correlation score obtained based on the second correlation score, improving the accuracy of correlation analysis.

Step S1032: Perform, by using the Hungarian algorithm, one-to-one correlation matching between each object and each existing object trajectory based on the first correlation score between each object and each existing object trajectory.

In some implementations, although a higher first correlation score indicates a higher possibility that the object in the current frame and the object represented by the object trajectory are the same object when correlation matching is performed based on the first correlation score, one object in the current frame may correspond to a plurality of object trajectories as first correlation scores between the object in the current frame and the plurality of object trajectories are the same. In this regard, one-to-one correlation matching may be performed between the objects in the current frame and the object trajectories based on first correlation scores by using the Hungarian algorithm, to determine which object trajectory represents an object that is the same object as each object in the current frame. In this way, one object in the current frame corresponds to one object trajectory, avoiding the above case where one object in the current frame corresponds to a plurality of object trajectories.

In this implementation, the above correlation matching may be performed by using a conventional Hungarian algorithm. A process of performing the above correlation matching by using the Hungarian algorithm is not described in detail in this implementation.

Based on the method described with the above steps S1031 to S 1032, it can be accurately determined whether each object in the current frame and the object represented by each object trajectory are the same object, which is beneficial to improving the accuracy of object tracking.

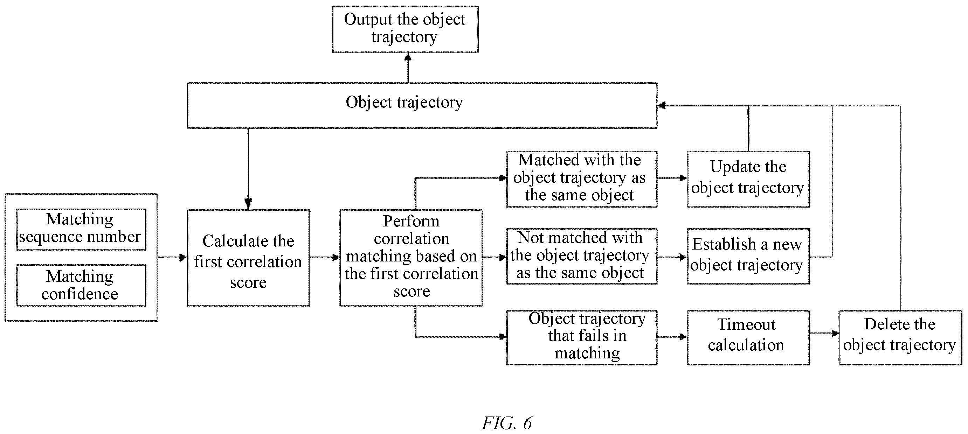

The following briefly describes, in conjunction with FIG. 6, a process of performing correlation analysis on the object in the current frame and the object trajectory by using the above method, and processing the object trajectory based on a result of correlation analysis.

First, the first correlation score is calculated based on the object sequence number and the matching confidence in the object matching relationship. Then, one-to-one correlation matching is performed between the object in the current frame and each existing object trajectory based on the first correlation score by using the Hungarian algorithm.

For any object trajectory, if it is determined through matching that the object in the current frame and an object represented by the object trajectory are the same object, the object trajectory is updated based on the object in the current frame, and an updated object trajectory is output; if the object in the current frame and an object represented by the object trajectory are not the same object, a new object trajectory is established based on the object in the current frame, and the newly established object trajectory is output after establishment is completed; or if the object trajectory is not matched with any one of the objects in the current frame as the same object, timeout calculation is performed. After a preset duration, if the object trajectory is not matched with any one of objects in data frames in the preset duration as the same object, it indicates that the object represented by the object trajectory is already distant from the smart device and does not need to be tracked any longer. Therefore, the object trajectory may be deleted.

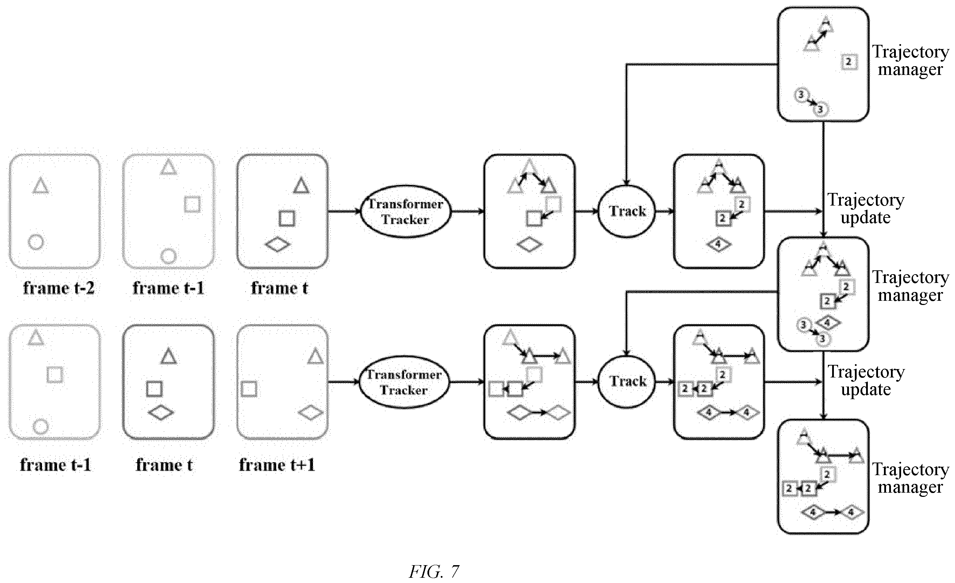

The following briefly describes, in conjunction with FIG. 7, a process for performing object tracking by using the methods described in the above implementations.

When the current frame is a frame t, two historical frames, frame t-1 and frame t-2, are obtained. A data frame sequence is obtained based on the frame t, the frame t-1, and the frame t-2, and the data frame sequence is input into the transformer network (Transformer Tracker in FIG. 7) for matching between objects in the current frame and objects in the two historical frames. As shown in FIG. 7, the object represented by the triangle in the frame t is matched with the objects represented by the triangles in the frame t-1 and the frame t-2 as the same object; the object represented by the square in the frame t is matched with the objects represented by the squares in the frame t-1 and the frame t-2 as the same object; and the object represented by the rhombus in the frame t is matched with no objects in the frame t-1 and the frame t-2. After object matching is completed, existing object trajectories are obtained from a trajectory manager for correlation analysis with the object trajectory. Through correlation analysis, it is determined that the object represented by the triangle in the frame t and the existing object trajectory represented by the triangle in the trajectory manager are the same object. Therefore, the object trajectory may be updated based on the object represented by the triangle in the frame t. Similarly, the existing object trajectory represented by the square in the trajectory manager can also be updated based on the object represented by the square in the frame t. The object represented by the rhombus in the frame t is not matched with any one of existing object trajectories in the trajectory manager. Therefore, a new object trajectory may be established based on the object represented by the rhombus in the frame t. Finally, trajectory tracking is performed on the trajectory manager based on a result of the above correlation analysis.

Trajectory tracking in the case that the current frame is the frame t is thus completed.

When the current frame is a frame t+1, two historical frames, frame t and frame t-1, are obtained, and a data frame sequence is obtained based on the frame t+1, the frame t, and the frame t-1. A process performed after the data frame sequence is obtained is the same as the above process performed when the current frame is the frame t, and is not described in detail herein.

It should be noted that, although the steps are described in a specific order in the above embodiments, those skilled in the art may understand that in order to implement the effects of the invention, different steps are not necessarily performed in such an order, but may be performed simultaneously (in parallel) or in other orders. These adjusted solutions and the technical solutions described in the invention are equivalent technical solutions and shall all fall within the scope of protection of the invention.

Those skilled in the art may understand that all or some of the procedures in the method in the above embodiments of the invention may be implemented by using a computer program instructing related hardware. The computer program may be stored in a computer-readable storage medium. When the computer program is executed by at least one processor, the steps in the above method embodiments may be implemented. The computer program includes computer program code, and the computer program code may be in the form of source code, target code, and an executable file, or in some intermediate forms, etc. The computer-readable storage medium may include any entity or apparatus that can carry the computer program code, such as a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

According to another aspect of the invention, there is further provided a computer-readable storage medium.

In an embodiment of the computer-readable storage medium according to the invention, the computer-readable storage medium may be configured to store a program for performing the object tracking method in the above method embodiments, and the program may be loaded and executed by at least one processor to implement the above object tracking method. For ease of description, only parts related to the embodiments of the invention are shown. For specific technical details that are not disclosed, refer to the method part of the embodiments of the invention. The computer-readable storage medium may be a storage apparatus device formed by various electronic devices. Optionally, the computer-readable storage medium in this embodiment of the invention is a non-transitory computer-readable storage medium.

According to another aspect of the invention, there is further provided a smart device.

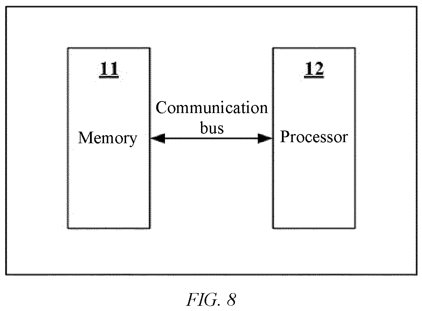

In an embodiment of the smart device according to the invention, the smart device may include: at least one processor; and a memory in communication connection with the at least one processor, where the memory stores a computer program that, when executed by the at least one processor, implements the method described in any of the above embodiments. The smart device described in the invention may include a driving device, a smart car, a robot, etc. Referring to FIG. 8, FIG. 8 shows an example in which a memory 11 is in communication connection with a processor 12 through a bus.

In some embodiments of the invention, the smart device may further include at least one sensor for sensing information. The sensor is in communication connection with any type of processor mentioned in the invention. Optionally, the smart device may further include an autonomous driving system for guiding the smart device to run autonomously or assisting in driving. The processor is in communication connection with the sensor and/or the autonomous driving system, for performing the method described in any of the above embodiments.

Heretofore, the technical solutions of the invention have been described in combination with the implementations shown in accompanying drawings. However, those skilled in the art can readily understand that the scope of protection of the invention is apparently not limited to these particular implementations. Those skilled in the art can make equivalent changes or substitutions to the related technical features without departing from the principles of the invention, and all the technical solutions with such changes or substitutions shall fall within the scope of protection of the invention.

## Claims

1. An object tracking method, applied to a smart device configured with a plurality of sensors, the method comprising:
obtaining a data frame sequence, wherein the data frame sequence comprises frame information of a plurality of data frames, the plurality of data frames are from data frames acquired by the plurality of sensors, the plurality of data frames comprise a current frame and a plurality of historical frames, the current frame and the plurality of historical frames are arranged in a timing sequence, and the frame information comprises object features of an object in the data frame;
performing matching between an object in the current frame and an object in each historical frame based on object features of the object in the current frame and the object in each historical frame, to obtain an object matching relationship of the object in the current frame at a historical moment corresponding to each historical frame;
performing correlation analysis on the object in the current frame and an existing object trajectory based on the object matching relationship of the object in the current frame at each historical moment, to determine whether the object in the current frame and an object represented by the existing object trajectory are the same object; and
updating the existing object trajectory based on the object in the current frame if the object in the current frame and the object represented by the existing object trajectory are the same object; or
establishing a new object trajectory based on the object in the current frame if the object in the current frame and the object represented by the existing object trajectory are not the same object.

2. The method according to claim 1, wherein
the object matching relationship comprises an object sequence number and a matching confidence of the object sequence number, wherein the object sequence number is determined based on a sequence number of a matched object in the historical frame, and the matched object is an object in the historical frame that is matched with the object in the current frame as the same object.

3. The method according to claim 1 or 2, wherein the plurality of sensors comprise a first sensor and a second sensor, wherein a data frame acquisition frequency of the first sensor is higher than that of the second sensor, and an error of an object in a data frame acquired by the first sensor is greater than that of an object in a data frame acquired by the second sensor; and the obtaining a data frame sequence comprises:
if the current frame is a data frame acquired by the first sensor, obtaining first historical frames with a number of frames equal to a first preset value and prior to the current frame in the timing sequence, obtaining second historical frames with a number of frames equal to a second preset value prior to the current frame in the timing sequence, and obtaining the data frame sequence based on the current frame, the first historical frames, and the second historical frames; or
if the current frame is a data frame acquired by the second sensor, obtaining second historical frames with a number of frames equal to a third preset value prior to the current frame in the timing sequence, and obtaining the data frame sequence based on the current frame and the second historical frames,
wherein
the first historical frame is a data frame acquired by the first sensor, the second historical frame is a data frame acquired by the second sensor, the first preset value is less than the second preset value, and a sum of the first preset value and the second preset value is equal to the third preset value.

4. The method according to any one of claims 1 to 3, wherein the object features of the object in the data frame is obtained in the following steps:
performing object detection on the data frame, at least to obtain a detection box of the object in the data frame;
obtaining data features and a timestamp of the data frame;
obtaining a type of a sensor that acquires the data frame; and
at least obtaining the object features based on the detection box, the data features, the timestamp, and the type.

5. The method according to claim 4, wherein the plurality of sensors comprise a LiDAR and a camera, and the obtaining data features of the data frame comprises:
if the data frame is a point cloud frame acquired by the LiDAR, obtaining motion information of an object in the point cloud frame; or
if the data frame is an image frame acquired by the camera, obtaining visual features of the image frame.

6. The method according to any one of claims 2 to5, wherein the object in the data frame comprises an actual object and a virtual object, the actual object is an object obtained by performing object detection on the data frame, and the virtual object is a background of the data frame; and the method further comprises:
determining the object sequence number in the object matching relationship in the following steps:
using a sequence number of the actual object as the object sequence number if the matched object is the actual object; or
using a fourth preset value as the object sequence number if the matched object is the virtual object.

7. The method according to any one of claims 1 to 6, wherein the performing matching between an object in the current frame and an object in each historical frame comprises:
performing, by using a transformer network, matching between the object in the current frame and the object in each historical frame based on the object features of the object in the current frame and the object in each historical frame.

8. The method according to claim 7, wherein the transformer network comprises an input layer, an encoder, and an output layer, wherein
the input layer is configured to obtain the object features of the object in the current frame and the object in each historical frame;
the encoder is configured to encode the object features of the object in the current frame and the object in each historical frame, to obtain an encoding result, the encoding result comprising a correlation weight between the object in the current frame and the object in each historical frame, and the correlation weight indicating a degree of correlation between the object in the current frame and the object in the historical frame; and
the output layer is configured to determine, based on the encoding result, the object matching relationship of the object in the current frame at the historical moment corresponding to each historical frame.

9. The method according to claim 8, wherein the encoder comprises a first mask layer configured to:
multiply the correlation weight between the object in the current frame and the object in the historical frame by a coefficient with a value of zero if a distance between the object in the current frame and the object in the historical frame is greater than a set value,
wherein the set value is a product of relative time and a preset speed threshold, the relative time being a time difference between a timestamp of the current frame and a timestamp of the historical frame.

10. The method according to claim 8 or 9, wherein the transformer network further comprises a decoder, wherein
the decoder is configured to decode the object features of the object in the current frame and the object in each historical frame, and the encoding result, to obtain a decoding result; and
the output layer is further configured to determine, based on the decoding result, the object matching relationship of the object in the current frame at the historical moment corresponding to each historical frame.

11. The method according to claim 10, wherein the plurality of sensors comprise a third sensor and a fourth sensor, and an error of an object in a data frame acquired by the third sensor is greater than that of an object in a data frame acquired by the fourth sensor; and the decoder comprises a second mask layer configured to:
obtain, based on the correlation weight in the encoding result, a matched object from the object in each historical frame that is matched with the object in the current frame as the same object;
if the current frame is a data frame acquired by the fourth sensor, obtain a specified object from the matched object that is matched with the object in the current frame as the same object, the specified object being a matched object in a data frame acquired by the third sensor; and
multiply object features of the specified object by a coefficient with a value of zero.

12. The method according to any one of claims 2 to 11, wherein there are a plurality of objects in the current frame, and a plurality of existing object trajectories, and the performing correlation analysis on the object in the current frame and an existing object trajectory comprises:
performing, by using a Hungarian algorithm, one-to-one correlation matching between each object in the current frame and each existing object trajectory based on object matching relationships of the objects in the current frame at each historical moment, to determine whether each object and an object represented by each existing object trajectory are the same object.

13. The method according to claim 12, wherein the performing one-to-one correlation matching between each object in the current frame and each existing object trajectory comprises:
obtaining, based on an object matching relationship of each object in the current frame at each historical moment, a first correlation score between each object and each existing object trajectory; and
performing, by using the Hungarian algorithm, one-to-one correlation matching between each object and each existing object trajectory based on the first correlation score between each object and each existing object trajectory,
wherein
the first correlation score indicates a confidence that the object in the current frame and the object represented by the existing object trajectory are the same object.

14. The method according to claim 13, wherein the obtaining a first correlation score between each object and each existing object trajectory comprises:
obtaining, for each object, a second correlation score between the object and each existing object trajectory at each historical moment; and
using a sum of all second correlation scores between the object and each existing object trajectory as the first correlation score between the object and each existing object trajectory,
wherein
if an object sequence number of the object at the historical moment has not occurred in the existing object trajectory, the second correlation score is zero; or
if an object sequence number of the object at the historical moment has occurred in the existing object trajectory, a weighted sum of a matching confidence of the object sequence number and a fifth preset value is calculated, to obtain the second correlation score based on a calculation result of the weighted sum,
the fifth preset value indicating that the object sequence number of the object in the current frame at the historical moment has occurred in the existing object trajectory.

15. A smart device, comprising:
at least one processor;
a memory in communication connection with the at least one processor,
wherein the memory stores a computer program that, when executed by the at least one processor, implement the object tracking method according to any one of claims 1 to 14.
